(19) Europäisches Patentamt
European Patent Office
Office européen des brevets

(11) EP 2 857 928 B1

(12) **EUROPEAN PATENT SPECIFICATION**

(45) Date of publication and mention
of the grant of the patent:
**29.05.2019  Bulletin 2019/22**

(21) Application number: **13186981.0**

(22) Date of filing: **01.10.2013**

(51) Int Cl.:
*G06F 1/26* (2006.01)       *H02M 3/00* (2006.01)
*H02H 9/00* (2006.01)       *H02J 1/00* (2006.01)
*G08B 5/36* (2006.01)       *G08B 5/38* (2006.01)
*G08B 17/10* (2006.01)      *H05B 41/30* (2006.01)
*H02H 9/02* (2006.01)       *H02J 1/10* (2006.01)

(54) **Bus coupled alarm device**

Busgekoppelte Alarmvorrichtung

Dispositif d'alarme à bus couplé

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.04.2015  Bulletin 2015/15**

(73) Proprietor: **Novar GmbH
41469 Neuss (DE)**

(72) Inventors:
• **Janssen, Robin
41469 Neuss (DE)**

• **Ollik, Waldemar
41469 Neuss (DE)**
• **Waas, Jac
4909 AJ Oosteind - Oosterhout (NL)**

(74) Representative: **Henkel, Breuer & Partner
Patentanwälte
Maximiliansplatz 21
80333 München (DE)**

(56) References cited:
**EP-A2- 1 006 500        US-A- 5 914 542
US-A1- 2011 273 022**

EP 2 857 928 B1

**Description**

The present invention relates to a bus coupled alarm device and especially to an audio or visual alarm device (AAD or VAD) coupled to a bus, e.g. a two wired bus, for informing people within a building about hazardous situations or events.

The European Standard EN54-23, which is intended to be binding in near future, specifies the requirements, test methods and performance criteria for visual alarm devices in a fixed installation intended to signal a visual warning of a fire between the fire detection and fire alarm system and the occupants of a building. It covers those devices which derive their operating power by means of a physical electrical connection to an external source such as a fire alarm system. The visual alarm devices can be pulsing or flashing visual alarm devices.

According to this standard VADs can be classified into three categories, namely ceiling mounted devices, wall mounted devices and an open class category. Each of these categories has specific targets for light distribution patterns. The devices will have to guarantee a coverage volume where a required illumination of 0.4 lux or 0.4 lm/m$^2$ is met.

The flash rate of a VAD should be between 0.5 Hz and 2 Hz and should emit either a red or white flash.

Different light dispersion characteristics are required according to the VADs intended mounting position. Wall mounted VAD will be effective in a wide range of applications, but the manufacturer will be required to state a mounting height, which is a minimum 2.4 m, followed by the width of a square room over which the VAD will provide coverage. Therefore, the specification code with a VAD suitable for a wall application could read W-2.4-6, i.e. mounted at a height of 2.4 m the VAD will cover a room 36 m$^2$. The VAD will therefore be required to cover the volume below its mounting height.

Ceiling mounted VADs are suitable for broad coverage in regular shaped rooms. Ceiling VADs must state the height of the ceiling at which it is designed to operate. This can be 3 m, 6 m or 9 m. The VAD in this case needs to radiate light in a cylinder below the mounting point. Therefore the specification code could read C-6-6 i.e. mounted at a ceiling height of 6 m, the VAD will cover a cylinder 6 m in diameter.

To meet the requirements of BS EN54-23 and cover a practical room size encountered in most situations, VADs need to have higher light output levels than those generally used in the market today, leading to a significant increase in current consumption due to the use of higher output devices or to a greater number of less powerful units.

On the other hand the present bus systems used to connect the VADs with a control panel and to supply power to the VADs have a limited cross section of the wires and allow only a limited amount of electrical current. Especially in large bus systems having a length up to 1000 m, the number of VADs, which can be connected to the bus, is therefore limited.

Beside the visual alarm often an acoustic alarm is issued at the same time. The acoustic alarm devices (AAD) will have to be powered through the same bus, as well, and the output level of the sound should not be affected by the flashing of the VADs. Often combined alarm devices, emitting flash light and sound, are used.

As one measure to cope with this conflicting demands it might be considered to provide a plurality of different VADs, within each of the above three categories but adapted to the size of the coverage area. This increases the manufacturing costs of the system and is susceptible to errors when assembling the system in the building. It would be difficult to guarantee that the right VAD is mounted at a particular place. This involves the risk that either the coverage area of the VAD is too small, or even worse the power demand of the whole system in case on an alarm or in case of initializing the system would be too large, leading to break down of the bus system.

EP 1006500 A2 discloses a smoke detector to be coupled to a bus and comprising an electrical storage.

US 5 914 542 A1 discloses an aircraft electrical energy supply comprising a capacitor a boost converter for controlling the discharging of the capacitor.

US 2011/0273022A1 discloses a hybrid power system comprising a DC bus to which a plurality of renewable power sources and loads are connected through respective converters or inverters. Additionally a power storage is connected to the bus through a regulator.

It is an object of the invention to overcome these problems and to provide an improved bus device for a bus coupled alarm system. The invention is defined by the appended claims.

According to the invention the bus device comprises at least one electrical consumer, at least one capacitor for supplying electrical energy to the electrical consumer, said capacitor being connected to be charged through a bus, a current limiter for limiting the current supplied through the bus to the capacitor during charging, a controller for controlling the current limiter so as to adjust a current limit.

According to a further aspect of the invention the at least one electrical consumer is an acoustic alarm device or element or a visual alarm device or element.

Furthermore, the bus device of the invention can be provided with a memory or storage unit for storing a value representative for the current limit, wherein the controller controls the current limiter based on this representative value.

The memory or storage unit preferably is configured to overwrite the representative value under the control of a bus command received through the bus.

Alternatively, the memory or storage unit can be implemented as a read only memory storing a preset representative value for the current limit.

According to a preferred embodiment the current limiter circuit comprises a plurality of parallel connected current limiter circuits, wherein each current limiter circuit includes a resistor and a switching element connected in series, a current sensing element for determining the current through the resistor and wherein the controller controls the switching state of the switching element depending on the current through the resistor.

In an alternative embodiment a single current limiter circuit comprises a resistor and a power transistor connected in series, and further comprising a current sensing element for determining the current through the resistor. The operating conditions of the power transistor are controlled by the controller depending on the current through the resistor as detected by the current sensing element.

The controller can be connected via the bus to a central panel so as to receive a current limit value. Alternatively, the current limit value can be obtained from the memory or storage unit of the bus device.

In an alternative configuration the bus device further comprises a second current limiter, connected in parallel to the first current limiter wherein one of the two current limiters is connected to a capacitor for powering a LED, while the other one is connected with a capacitor for powering a piezoelectric sound element. The configuration of the second current limiter can be the same as the one of the first current limiter.

Furthermore, the controller can be configured to be individually addressable through the bus and to receive a bus command to temporarily change the current limit of one or both current limiters.

Details of some embodiments of the invention will be described in connection with the accompanying drawings, wherein:

Fig. 1    shows an exploded view of a wall mounted VAD;

Fig. 2    shows in more detail the optical elements of the VAD of Fig. 1;

Fig. 3    shows the ideal coverage area of a ceiling mounted VAD;

Fig. 4    shows a block diagram of a visual alarm device according to the invention;

Fig. 5    shows a block diagram similar to Fig. 4 for another VAD;

Fig. 6    shows an example of the configuration of a current limiter;

Fig. 7    shows a further example of the configuration of a current limiter.

Preferred embodiments of the invention will be described based on the above figures.

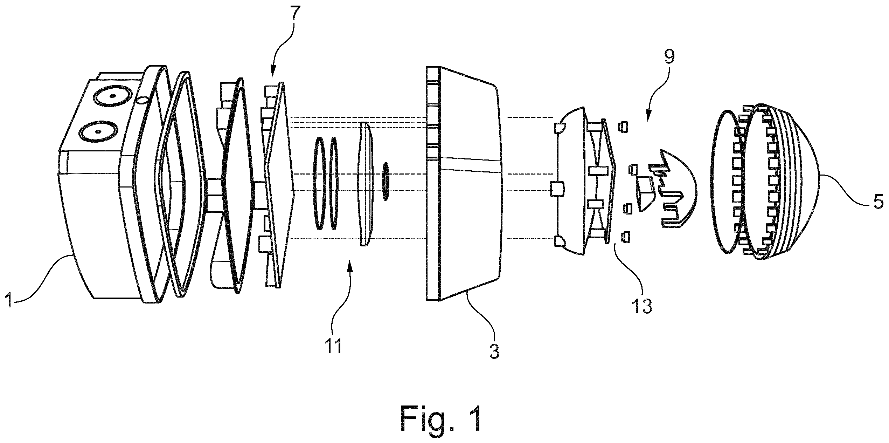

Fig. 1 shows an exploded view of a combined audio and visual alarm device configured to be mounted at a wall.

This VAD comprises mounting box 1, an outer horn 3 and a horn cup 5, forming together a housing.

As can be seen in Fig. 1 within the housing there is provided a main printed circuit board (pcb) 7 and a strobe printed circuit board 9.

A piezoelectric sound element 11 and a LED based optic 13 is connected with the main pcb 7 and the strobe pcb 9, respectively.

Although not shown in Fig. 1 the alarm device is configured so as to be connected to a two wired bus supplying power and commands to the alarm device. Different bus configurations, e.g. those having dedicated lines for power supply and for commands, can be used instead.

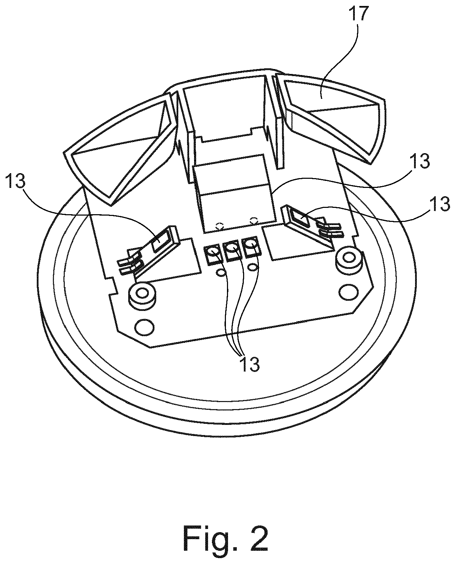

Fig. 2 shows in more detail the optical components of the VAD of Fig. 1.

The VAD of this example comprises five LEDs 13 in total. Two of them are fixed on raised tabs. A lens 15 is located near the three central LEDs. Furthermore, a reflector 17 cooperates with the LEDs 13 so as to guide the light emitted from the LEDs 13 in the desired directions.

Although in this example the VAD is equipped with five LEDs 13 and the corresponding optics, this is not essential for the present invention, and any number of LEDs or other light emitting elements might be used. Instead of a reflector 17 and a lens 15 it will be possible to provide other light guide members, like fiber optics.

As mentioned before, the VAD of Fig. 1 and Fig. 2 is intended as a wall mounted VAD. It is obvious for a skilled person that a VAD to be mounted at a ceiling will have a different configuration of the optic and/or a different number of LEDs.

The LEDs 13 in the VAD will be operated in case of an alarm or for testing purposes so as to emit light in form of pulses or flashes.

The luminous intensity of pulsed light is different compared to the intensity of non-pulsed light due to the behavior of the human eye. The so called effective intensity Ieff of pulsed light, expressed in candela can be determined with the following equation, the Blondel-Rey equation

$$I_{eff} = \frac{\int_{t1}^{t2} I(t)dt}{a + (t2 - t1)}$$

where "I(t)" is the instantaneous intensity in candela as a function of time, "a" is the Blondel-Rey constant and "t2-tl" is the pulse duration (seconds).

Normally, the maximum value of effective intensity is obtained when t2 and t1 are chosen so that the effective intensity is equal to the instantaneous intensity at t2 and t1.

From the Blondel-Rey equation it is clear that the effective intensity depends on the pulse duration. The average power also depends on the flash rate, which is not considered in the Blondel-Rey equation.

For rectangular pulses the above equation reduces to

$$I_{eff} = I_0 \frac{\Delta t}{a + \Delta t}$$

with the steady state intensity $I_0$ and the pulse duration $\Delta t$.

An increase in pulse duration leads to an increase in effective intensity. The behavior is non-linear.

The Blondel-Rey factor is the reciprocal of the ratio between effective intensity to steady state intensity. It describes how much more luminous intensity in a pulse is needed to reach the steady state intensity of non-pulsed light.

As example, for a pulse duration of 50ms the effective intensity is only about 20% of the steady state intensity. The luminous intensity of the pulse needs to be five times higher to reach the steady state intensity. As consequence, five times more pulse power is needed.

The average power will always increase with increasing pulse duration because to double the pulse duration means not to double the effective intensity or to halve the pulse power.

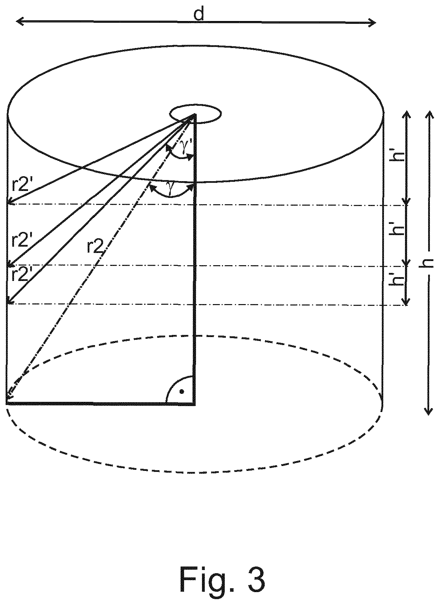

Fig. 3 shows the ideal coverage area for a ceiling mounted VAD. The lens 15 and any reflector 17 shall be optimized for the ceiling-mounted device. In the example of Fig. 3 the coverage area is indicated for a VAD fulfilling the standard for a C-3-7.2, this means for a signaling range in form of a cylinder with a height of 3 m and a diameter of 7.2 m. The minimum light emission of the cylinder base and the shell surface should be 0.4 lx, as mentioned in the introductory part.

In case of mounting the VAD in a larger room, e.g. with a height of 6 m the light emission has to be adapted accordingly, so as to achieve the required minimum light emission of the cylinder base of 0.4 lx. The VAD would therefore require a larger electrical current for the operation.

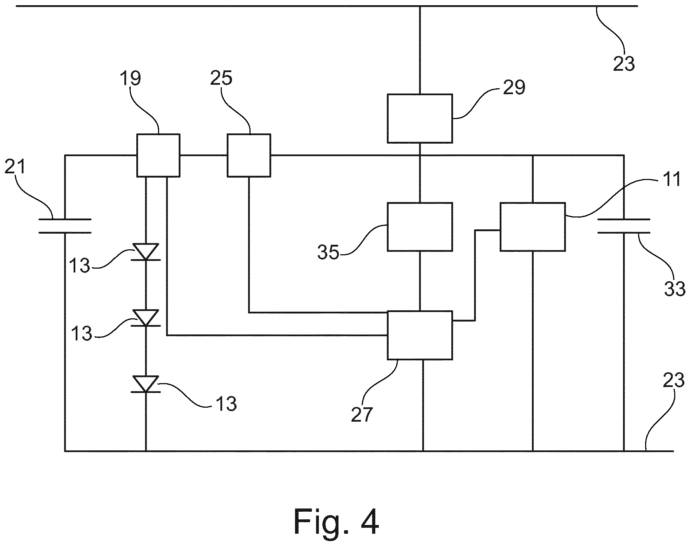

Fig. 4 shows an example of a circuit configuration for a VAD according to the invention.

As shown in this figure a plurality of LEDs 13 connected in series with red or white color can be used. As an alternative a parallel or partially parallel usage of LEDs 13 is also possible (not shown). The LEDs 13 are driven by a current controlled switch mode power supply (LED driver) 19.

The operational mode is preferably a pulse control with a pulse duration between 50ms to 200ms (≤200ms are allowed according to EN54-23). The energy for the pulse is taken from an energy storage 21 (e.g. capacitor or accumulator). The energy storage 21 is recharged by a bus 23 via a charging unit 25 controlled by a controller 27 (MCU).

The flash rate can be 0.5s to 2s (according to EN54-23, but may vary in different countries so local regulations need to be considered) and has a direct impact on the average current consumption and consequently on the main current limit of the device because the energy storage 21 needs to recharge within this time. Accordingly the VDA is equipped with a current limiter 29.

The current limiter 29 of this VAD is variable and can be controlled by the controller 27. The current limiter 29 limits the maximum current the VAD can draw from the bus 23.

Depending on the available space and on the available charging current and charging method/final cap voltage, electrolytic capacitors, electrical double layer capacitors (e.g. gold cap, super cap) or accumulators can be used for the energy storage 21.

In case of bus powered VADs electrolytic capacitors 21 as energy storages will be charged to the bus voltage of about 40 V while electrical double layer capacitors would be charged to a maximum voltage of about 5 V (due to their construction, physical properties). Special types are available with 9 V, 12 V or even 15 V, but at cost of capacitor size with increasing voltage.

Also an electrolytic capacitor needs more space in comparison to the electrical double layer capacitor due to the high voltage. The electrical double layer capacitor is much smaller, but an additional charging circuitry might become necessary.

But the main limiting factor is the available bus current to charge the capacitor 21 within the limits of the EN54-23 standard (0.5 s to 2 s) regardless of the used type.

There are mainly two possibilities how the energy storage 21 can be used. As supply of energy only for the above mentioned pulse duration, or as supply of energy for the whole time of alerting.

In the first case the energy storage 21 is used as in case of a self-oscillating regulator so that the peak current through the string of LEDs 13 is fixed and the effective luminous intensity/illuminance can be set indirectly by the pulse duration.

Alternatively, in case of a PWM controlled regulator the peak current through the string of LEDs 13 can be directly set as a duty cycle. In addition, the pulse duration can be set.

A PWM controlled regulator allows more flexibility in relation to an adjustable light output, but adds complexity to the circuit.

As third approach it is possible to use a hardware adjustable peak current limit controlled by a MCU (again by PWM), in case of a self oscillating regulator.

For all cases, once the desired light output is set, the LED driver 19 has to ensure a constant power output. Mainly variations in input voltage and LED current dependency have to be compensated.

Temperature compensation can be achieved with the help of a NTC, if desired.

The pulse period can be based on a 0.5 s watch timer period with the help of a coded counter handling.

Since it is desired that all VADs connected to the bus should operate in a synchronized manner a corresponding command will be issued over the bus 23. Subsequently, the first pulse can be done e.g. 0.5 s delayed with respect to the synchronization. All further pulses will follow with a period of a multiple of 0.5 s (1 s, 1.5 s, 2 s).

To switch the VAD on and off for one pulse a timer output can be used. This ensures constant pulse duration independent of controller usage and will therefore not be interrupted, e.g. by a high prioritized bus communication.

The timer is started by program.

To ensure constant illumination without wasting bus energy there is a calibration value saved in a storage unit or memory element (EEPROM, not shown) reflecting the efficiency of the hardware (e.g. this might be used to cope with LEDs with increased efficiency, which might be used with the same circuit configuration in future). This value is set / calculated and saved in the memory or storage unit like e.g. an EEPROM during manufacturing and can be rewritten at need, either through a dedicated bus command or by a special calibration apparatus to be connected with the VAD.

The VAD will be configured by corresponding values given in the device class as discussed at the beginning of the description. These values as well will be stored in the storage unit in a customer data block and might be re-written by a dedicated bus command or during installation by a special setting apparatus.

A load factor, i.e. the share of the load on the bus attributed to the VAD, will be calculated taking calibration and configuration values into consideration.

The calculated value is used to set the current limiter 29.

The VAD will be deactivated by a further bus command on the bus. The VAD will stop action at once.

In order to allow an optimization of the entire alarm system comprising the bus 23 and a plurality of VAD a dedicated bus command is implemented for investigating the load factor of each VAD. Together with the command to re-write the setting parameters of each VAD this configuration allows to distribute the entire available power of the bus system in an efficient and reliable manner.

As shown in Fig. 4 the VAD is connected between the two wires of a bus 23. At one side a bus line is connected with the input of a main current limiter 29. The main current limiter 29 is connected with a charging unit 25 which in turn is connected with an energy storage 21 respectively a capacitor. The other side of the capacitor 21 is connected with the other bus line.

The VAD comprises furthermore an LED driver 19 and a series of LEDs 13, connected in series between the one side of the capacitor 21 and the second bus line.

The VAD of Fig. 4 furthermore comprises a main controller unit 27 for controlling the current limiter 29, the charging unit 25 and the LED driver 19. Additionally, if the VAD is intended to be used as an acoustic alarm device as well, a piezoelectric sound element 11 and a corresponding second capacitor 33 can be provided.

During alarm the LEDs 13 will be powered by the energy stored in the energy storage 21 respectively the capacitor. In idle times the energy storage 21 is charged through the charging unit 25, receiving the current from the main current limiter 29, which in turn receives the respective current through the bus 23.

Controller 27 controls the charging unit and the LED driver 19 depending on the actual values indicating the configuration of this particular VAD, stored in the storage unit or memory therein. That is, if the VAD is intended to cover a large area, the energy stored in the capacitor 21 might be used completely during one flash emission of light by the LED 13. In this case, the charging unit 25 and the main current limiter 29 will be controlled by the controller 27 so as to draw a large amount of current from the bus 23 in order to charge the capacitor 21 in the time between two pulses of the alarm.

On the other hand, if the VAD needs to cover only a small area, the capacitor 21 will not be depleted completely during a flash, and therefore, a smaller current will be enough to recharge the capacitor 21.

The same considerations hold true if the capacitor 21 is intended to cover not only one flash but the entire alarm duration time of several minutes.

The configuration shown in the figure has different capacitors for powering the sound alarm and the light alarm. This helps to avoid the problem that the intensive light alarm will influence the sound emission, since during the light alarm a lot of power is needed to power the LEDs 13.

Another aspect of the invention is that at the beginning, when powering up the bus 23 the first time, all capacitors 21 of all VAD devices connected with the bus 23 will be empty. This means that simultaneously all capacitors 21 will try to charge. Due to the current limiter 29 provided with the VADs it can be ensured that even in this case the maximum allowed current of the bus 23 is not exceeded.

As is shown in Fig. 4 a DC/DC-converter 35 is provided in the VAD so as to allow the controller 27 to be operated at a low voltage 3.3 V for example.

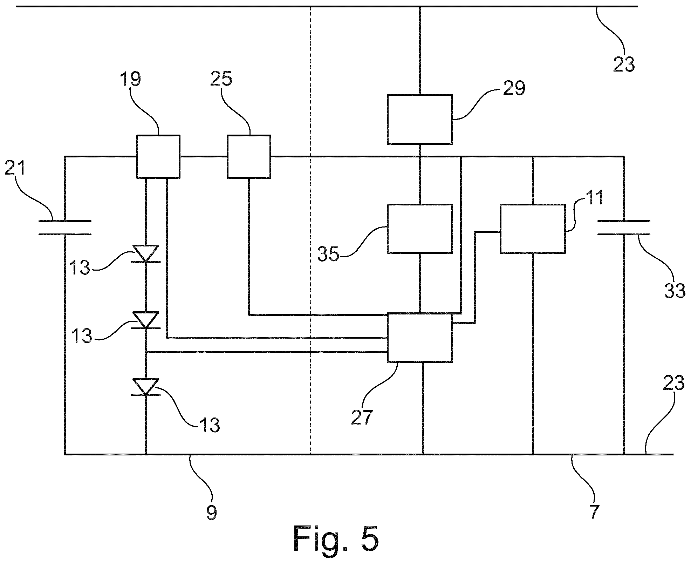

Fig. 5 shows a slightly different configuration of the VAD of the invention.

The main differences are that the respective components of the VAD electronic is split up into the main circuit board 7 and the spotlight or strobe circuit board 9, which can be physically separated. Additionally, in Fig. 5 a fault defect indication system can be implemented by the last LED 13 of the LED chain and the controller 27.

In this regard, the controller 27 is provided with a sensing input monitoring the voltage on the line connecting the current limiter 29 and the charging unit 25. This sensing input of the controller 27 is connected with the line connecting the charging unit 25 and the LED driver 19. Depending on the respective values detected by the sensing input, the LED will be powered or not.

In the embodiment shown in Fig. 5 the LED driver 19 is configured as a self-oscillating LED driver.

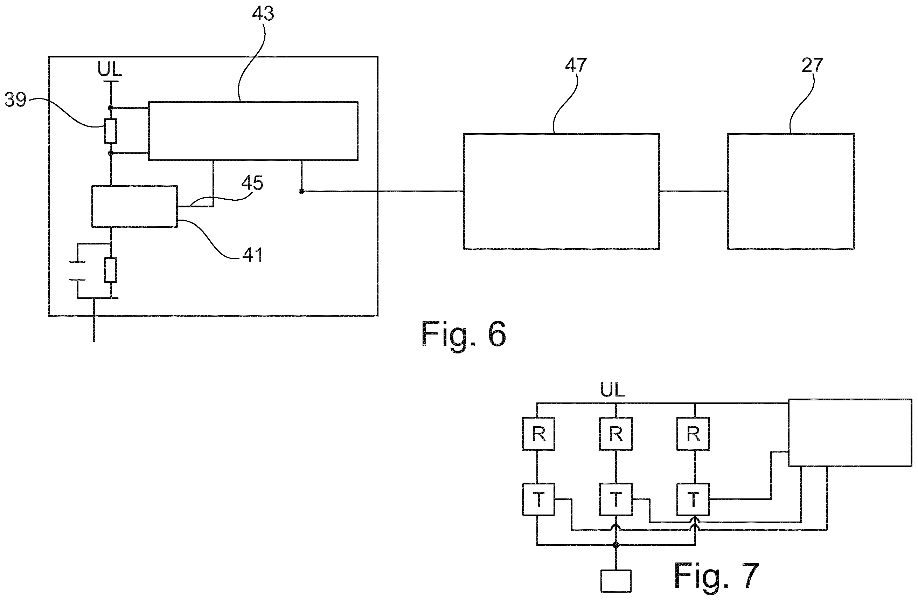

Fig. 6 shows in detail a configuration of a current limiter 29 which can be used in connection with the present invention. The current limiter 29 in this embodiment comprises a series connection of a resistor 39 and the power transistor 41.

The voltage drop of the resistor 39 is monitored by a dedicated monitoring circuit 43, which will provide an output to be supplied to the base respectively gate 45 of the transistor 41 so as to control the operating state of this transistor 41.

The monitoring circuit 43 in turn will receive a threshold value from the controller 27, which will be used to determine the operation of the monitoring circuit 43 for setting the current limit of this current limiter 29.

According to the present invention, furthermore, the monitoring circuit 43 controlling the operating state of the power transistor 41 is supplied with the output signal of a variable reference current setting unit 47, which in turn is controlled by the controller 27 of the VAD. The variable reference current limit setting unit 47 will control the base/gate voltage of the power transistor depending on the voltage drop across the resistor in comparison with the variable reference values set by the controller 27 or the storage unit.

Fig. 7 shows an alternative configuration of the current limiter 29. This current limiter comprises a plurality (three) of current limiter circuits connected in parallel. Each current limiter circuit comprises a resistor 39 and a switching transistor 41 connected in series. The gates/bases of the transistors 41 of all current limiting circuits can be controlled in a similar way by a controller 27, supplying switching signals to a dedicated one, or two (or all gates) of all transistors.

Accordingly, the current limiter configured by two or more series connections of resistors and transistors - as shown in Fig. 7 - can be controlled so as to either block the current entirely, to open a first current path through the first resistor and transistor, to open a second current path to the second resistor and transistor or to open both current paths through both resistors and transistors simultaneous and so on. With this configuration a plurality of different currents limits can be implemented for charging a capacitor connected with this circuit. The controller 27 will be programmed depending on the actual intended location and use of the VAD so as to claim only a small part of the bus current, a medium size part of the bus current or a large part of the bus current, depending e.g. on whether the VAD is intended for a room height of 3, 6 or 9 m respectively.

Other configurations for the current limiters can be implemented as well. For example, more or less than three series connections of resistor and transistor can be implemented.

Finally, each VAD can be configured to comprise more than one current limiter, for example one current limiter can be used to limit the current for charging the capacitor connected to a first and a second load, a second current limiter can be used to charge a second capacitor connected to a third and fourth load. The first and second load for example can be the LEDs, whereas the third and fourth load can be electric piezo elements.

In the above embodiments the current limit implemented by the current limiter might be temporarily changed through a dedicated bus command. For example, in a testing environment, one VAD is tested, while the other VADs of the bus system remain idle. In his case the current limit of the tested VAD can be set to a higher value after the test, since only one of the VADs will need charging. Once the VAD is charged, the testing can proceed to the next VAD of the bus.

The visual alarm device the controller 27 controls the visual alarm element so as to emit the visual alarm signal in response to an electric alarm signal supplied through the bus.

The visual alarm signal should have a minimum luminous flux level within one of a plurality of predetermined alarm regions of a given dimension. A storage unit stores at least one set of operation setting values for the controller 27 to control the visual alarm element. Each set of operation setting values can be predefined depending on the dimensions of the predetermined alarm region.

Each set of operation setting values may comprise at least one of a value for the duty ratio of the visual alarm element, an electrical power level of the visual alarm element, a time value for a flash of the visual alarm element or a shape of the pulse to be supplied to the LEDs by the LED driver 19.

The visual alarm element can include a selecting unit, e.g. a manually operated switch, for selecting one set of operation setting values.

The storage unit can be configured as a write protected storage unit (EEPROM) storing only one set of operation setting values. This VAD can be configured so as to allow an easy exchange of the storage unit.

The controller 27 can be configured to transmit data via the bus, the data can be representative for the selected set of operation setting values, so as to allow a central control panel of the system to operate the system depending on all received sets of operation setting values.

In a special configuration, which is not shown in detail, the visual alarm device comprises a plurality of LEDs or other light emitting devices for emitting light into a plurality of directions. The controller 27 is configured so as to control the operation of the plurality of LEDs. The controller 27 controls at least one of the plurality of operation parameters of at least two of the plurality of LEDs so as to have different values and so that the respective LEDs emit different amounts of light. By doing so, the form of the coverage area can be varied without wasting power.

At least one of the plurality of operation parameters is one of a duty cycle and a maximum electric power of the LED.

At least one of the plurality of LEDs is provided with dedicated means 15, 17 for guiding the emitted light into a predetermined area.

The storage unit can be used to store data representative of the plurality of sets of operation parameters.

The storage unit might be configured so as to be overwritten by a bus command received through the bus 23.

With this configuration, in case a visual alarm device to be mounted at a ceiling for emitting a flashing optical signal, the respective LEDs of the plurality of LEDs can be controlled, so that less energy is supplied to those LEDs illuminating the area immediately below the visual alarm device, compared to those LEDs illuminating the surrounding. In this way it is possible to use the same VAD as a C-9-6, C-6-6 or C-3-6, without wasting power.

A similar implementation is possible in case of wall mounted VADs.

Although the present invention has been described in connection with detailed embodiments, it is obvious for a person skilled in the art that the invention is not limited to these embodiments. Various modifications can be implemented by a person skilled in the art. For example, instead of using capacitors, it will be possible to provide the VADs with secondary cells. As an alternative, secondary cells might be provided in addition to capacitors. Instead of LEDs other kind of light emitting devices might be used, like e.g. laser diodes in combination with a fluorescent medium.

**Claims**

1. An alarm device configured to be connected to the bus (23) of an alarm system comprising:

    at least one electrical consumer (11, 13);
    at least one energy storage (21) for supplying electrical energy to the electrical consumer (11, 13), said energy storage (21) being connected to be charged through the bus (23);
    a current limiter (29) for limiting the current supplied through the bus (23) to the energy storage (21) during charging;
    a controller (27) for controlling the current limiter (29) so as to adjust a current limit.

2. The alarm device of claim 1, wherein the at least one electrical consumer (11, 13) is an acoustic alarm element (11).

3. The alarm device of claim 1, wherein the at least one electrical consumer (11, 13) is a visual alarm element (13).

4. The alarm device of any of claims 1 to 3, further comprising a memory unit for storing a value representative for the current limit, the controller (27) controlling the current limiter (29) based on this representative value.

5. The alarm device of claim 4, wherein

the memory unit is configured to overwrite the representative value under the control of a bus command received through the bus (23).

6. The alarm device of claim 4, wherein the memory unit is a read only memory storing a preset representative value for the current limit.

7. The alarm device of claim 4, wherein the current limiter (29) comprises at least one current limiter circuit, the current limiter circuit comprising a resistor (39) and a transistor (41) connected in series, the current limiter (29) further comprises a monitoring circuit (43) for supplying a voltage to the gate of the transistor (42) depending on the current limit.

8. The alarm device of any of the preceding claims, wherein:
    the current limiter (29) further comprises a second current limiter circuit, connected in parallel to the first current limiter circuit.

9. The alarm device of any of the preceding claims, wherein the controller (27) is configured to be individually addressable through the bus (23) and to receive a bus command for temporarily change the current limit of the current limiter (29).

10. The alarm device of claim 9, comprising a second current limiter (29), which is connected to a second capacitor (21) and at least one second electrical consumer (11).

**Patentansprüche**

1. Alarmvorrichtung, die ausgestaltet ist, um mit eiem Bus (23) eines Alarmsystems verbunden zu sein, mit:

    zumindest einem elektrischen Verbraucher (11, 13);
    zumindest einem Energiespeicher (21) zum Zuführen von elektrischer Energie an den elektrischen Verbraucher ,(11, 13), wobei der Energiespeicher (21) zum Laden über einen Bus (23) verbunden ist;
    einem Strombegrenzer (29) zum Begrenzen des Stroms, der über den Bus (23) an den Energiespeicher (21) während des Ladens geliefert wird;
    einer Steuerung (27) zum Steuern des Strombegrenzers (29), um so eine Strombegrenzung einzustellen.

2. Alarmvorrichtung nach Anspruch 1, bei der zumindest eine elektrische Verbraucher (11, 13) ein akustisches Alarmelement (11) ist.

3. Alarmvorrichtung nach Anspruch 1, bei dem der zumindest eine elektrische Verbraucher (11, 13) ein visuelles Alarmelement (13) ist.

4. Alarmvorrichtung nach deinem der Ansprüche 1 bis 3, des Weiteren mit:
einer Speichereinheit zum Speichern eines Wertes, der für die Strombegrenzung repräsentativ ist, wobei die Steuerung (27) den Strombegrenzer (29) beruhend auf diesem repräsentativen Wert steuert.

5. Alarmvorrichtung nach Anspruch 4, bei der die Speichereinheit ausgestaltet ist, um den repräsentativen Wert unter der Steuerung eines Busbefehls, der über den Bus (23) empfangen wird, zu überschreiben.

6. Alarmvorrichtung nach Anspruch 4, bei der die Speichereinheit ein Nur-Lese-Speicher ist, der einen voreingestellten Wert für die Strombegrenzung speichert.

7. Alarmvorrichtung nach Anspruch 4, bei der

der Strombegrenzer (29) zumindest eine Strombegrenzerschaltung umfasst, wobei die Strombegrenzerschaltung einen Widerstand (39) und einen Transistor (41), die in Reihe geschaltet sind, enthält,
wobei der Strombegrenzer (29) des Weiteren eine Überwachungsschaltung (43) zum Zuführen einer Spannung an das Gate des Transistors (42) in Abhängigkeit von der Strombegrenzung umfasst.

8. Alarmvorrichtung nach einem der vorangehenden Ansprüchen, bei der
der Strombegrenzer (29) des Weiteren eine zweite Strombegrenzerschaltung umfasst, die parallel mit der ersten Strombegrenzerschaltung verbunden ist.

9. Alarmvorrichtung nach einem der vorangehenden Ansprüchen, bei der
die Steuerung (27) ausgestaltet ist, um individuell über den Bus (23) adressierbar zu sein und um einen Busbefehl zum vorübergehenden Ändern der Strombegrenzung des Strombegrenzers (29) zu empfangen.

10. Alarmvorrichtung nach Anspruch 8 mit:
einen zweiten Strombegrenzer (29), der mit einem zweiten Kondensator (21) und zumindest einem zweiten elektrischen Verbraucher (11) verbunden ist.

**Revendications**

1. Dispositif d'alarme configuré pour être connecté au bus (23) d'un système d'alarme comprenant :

au moins un consommateur d'électricité (11, 13) ;
au moins un accumulateur d'énergie (21) pour fournir de l'énergie électrique au consommateur d'électricité (11, 13), ledit accumulateur d'énergie (21) étant connecté pour être chargé par le biais du bus (23) ;
un limiteur de courant (29) pour limiter le courant fourni par le biais du bus (23) à l'accumulateur d'énergie (21) pendant une charge ;
une unité de commande (27) pour commander le limiteur de courant (29) de manière à ajuster une limite de courant.

2. Dispositif d'alarme selon la revendication 1, dans lequel
l'au moins un consommateur d'électricité (11, 13) est un élément d'alarme acoustique (11).

3. Dispositif d'alarme selon la revendication 1, dans lequel
l'au moins un consommateur d'électricité (11, 13) est un élément d'alarme visuel (13).

4. Dispositif d'alarme selon l'une quelconque des revendications 1 à 3, comprenant en outre
une unité de mémoire pour stocker une valeur représentative de la limite de courant, l'unité de commande (27) commandant le limiteur de courant (29) en fonction de cette valeur représentative.

5. Dispositif d'alarme selon la revendication 4, dans lequel
l'unité de mémoire est configurée pour écraser la valeur représentative sous la commande d'un ordre de bus reçu par le biais du bus (23).

6. Dispositif d'alarme selon la revendication 4, dans lequel
l'unité de mémoire est une mémoire morte stockant une valeur représentative prédéfinie de la limite de courant.

7. Dispositif d'alarme selon la revendication 4, dans lequel
le limiteur de courant (29) comprend au moins un circuit de limiteur de courant, le circuit de limiteur de courant comprenant un résistor (39) et un transistor (41) connectés en série,
le limiteur de courant (29) comprend en outre un circuit de surveillance (43) destiné à fournir une tension à la grille du transistor (42) selon la limite de courant.

**8.** Dispositif d'alarme selon l'une quelconque des revendications précédentes, dans lequel :
le limiteur de courant (29) comprend en outre un second circuit de limiteur de courant, connecté en parallèle au premier circuit de limiteur de courant.

**9.** Dispositif d'alarme selon l'une quelconque des revendications précédentes, dans lequel
l'unité de commande (27) est configurée pour pouvoir être individuellement adressée par le biais du bus (23) et recevoir un ordre de bus en vue de changer temporairement la limite de courant du limiteur de courant (29).

**10.** Dispositif d'alarme selon la revendication 9, comprenant
un second limiteur de courant (29), qui est connecté à un second condensateur (21) et au moins un second consommateur d'électricité (11).

Fig. 1

Fig. 2

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1006500 A2
- US 5914542 A1
- US 20110273022 A1